# EUROPEAN PATENT SPECIFICATION

(11) **EP 0 377 328 B1**
(45) Date of publication and mention of the grant of the patent: **18.08.1993**
(21) Application number: 89313652.3
(22) Date of filing: 28.12.1989
(51) Int. Cl.: F02N 11/04

(54) **VSCF starter/generator systems**
Anlasser-Generatoranordnungen mit variabler Geschwindigkeit und konstanter Frequenz
Systèmes de démarrage et générateur de courant à vitesse variable et fréquence constante

(30) Priority: 01.01.1989 US 304620
(43) Date of publication of application: 11.07.1990
(73) Proprietor: SUNDSTRAND CORPORATION, Rockford Illinois 61125- 7003 (US)
(72) Inventor: Baker, Donal Eugene, Elida, OH 45807 (US); Ogden, Jack Warren, Lima, OH 45806 (US)
(74) Representative: Serjeant, Andrew Charles

(56) References cited:
- EP-A- 0 237 246
- DE-A- 2 948 846
- PATENT ABSTRACTS OF JAPAN vol. 10, no. 42 (E-382)(2099) 19 February 1986,& JP-A-60 197198 (MITSUBISHI DENKI K.K.) 05 October 1985
- PATENT ABSTRACTS OF JAPAN vol. 10, no. 213 (E-422)(2269) 25 July 1986,& JP-A-61 052199 (MITSUBISHI ELECTRIC CORP.) 14 March 1986

## Description

This invention relates to variable speed constant frequency (VSCF) electric power systems and, more particularly, to such systems which provide both starter and generator functions.

In airborne electrical power generation systems, it is desirable to have a single system which provides both the starter and generator functions. The weight savings on an airplane can be substantial when a dedicated starter is eliminated. For this reason, electrical power systems which are capable of providing engine start functions can provide both cost and weight savings.

Variable speed constant frequency power generation systems are commonly used for aircraft applications. One type of VSCF system includes a variable speed generator which supplies DC power to a pair of DC link conductors. An inverter circuit receives DC power from the link conductors and produces a constant frequency AC output. The inherent simplicity and reliability of DC link variable speed constant frequency systems has been established and it is desirable to modify the existing designs to provide starter capability.

When a VSCF power system operates as an engine starter, the electronic power converter is reversed via power contactors so that it derives its input power from a utility power bus and delivers power to the generator which in turn operates as a motor. The electronic converter typically includes a three-phase rectifier and a DC to AC inverter. The rectifier receives power from the line and feeds it to the inverter. Thus, the power drawn from the utility bus is characteristic of a three-phase full-wave rectifier circuit. The currents for such a rectifier are known to be high in harmonic content, i.e., 20% of the fifth harmonic, 14% of the seventh, 9% of the eleventh, 8% of the thirteenth, and so on.

A filter of proper design could be added to the system which would reduce the harmonic currents to acceptable levels; however, such a filter will necessarily add substantial weight to the system because it must be designed around the lowest harmonic (20% of the fifth harmonic). For example, a 60/75 kVA system would require a filter weighing approximately 30 pounds, or about one-third of the total generator system weight. Another disadvantage of a large filter is the leading power factor which it presents to the system. If the aircraft is powered by a conventional constant speed generator (for example, a ground power cart), then this large leading power factor will cause the generator to self-excite, go to ceiling voltage, and damage the electrical system. Such an approach is not practical.

It is therefore desirable to design a VSCF starter/generator system in which the size of the required starter filter can be reduced.

Reference is made to prior art document EP-A-0237246 which discloses a starter/generator VSCF system which includes the elements of the preamble of claim 1.

This invention consists of a variable speed, constant frequency starter/generator system comprising for generator operation:
a dynamoelectric machine electrically connected to a first multiple phase bus;
a first multiple phase rectifier;
a pair of DC link conductors;
an inverter for converting a DC voltage on the DC link conductors to a floating multiple phase AC voltage on a second multiple phase bus; and
a transformer including a main winding for converting the floating multiple phase AC voltage on the second multiple phase bus to a ground-referenced, multiple phase AC voltage on an output bus;
and for starter operation:
means for applying an external multiple phase AC voltage to the output bus; the transformer further including an auxiliary winding for converting the external multiple phase voltage to a pair of phase displaced multiple phase voltages;
means for connecting a first one of the phase displaced multiple phase voltages to the first multiple phase rectifier and for connecting a second one of the phase displaced multiple phase voltages to a second multiple phase rectifier;
means for connecting the first and second multiple phase rectifiers to the DC link conductors to produce an output from the inverter on the second multiple phase bus; and
means for connecting the second multiple phase bus to the electric machine.

This invention also encompasses a method for operating a starter/generator system comprising the steps of, for a generating mode of operation:
rectifying a multiple phase, variable frequency AC output voltage from the dynamoelectric machine to produce a first DC voltage;
using the inverter to convert the first DC voltage to a floating, multiple phase, constant frequency AC voltage;
connecting the floating, multiple phase, constant frequency AC voltage to the transformer to produce a ground-referenced multiple phase AC output voltage; and
supplying the ground-referenced multiple phase AC output voltage to an external load;
and for a starting mode of operation:
applying an external multiple phase Ac voltage to the output bus;
using the auxiliary windings of the transformer to convert the external multiple phase AC voltage to a pair of phase displaced multiple phase voltages;
connecting the first one of the phase displaced multiple phase voltages to the first multiple phase rectifier and connecting the second one of the phase displaced multiple phase voltages to the second multiple phase rectifier;
connecting the first and second multiple phase rectifiers to the DC link conductors to produce a controlled frequency AC output voltage from the inverter on the second multiple phase bus; and
connecting the second multiple phase bus to the dynamoelectric machine to drive the dynamoelectric machine with the controlled frequency AC voltage.

The invention will become more readily apparent from the following description of the preferred embodiment thereof, shown by way of example only, in the accompanying drawings wherein:
Figures 1 and 2 are block diagrams of VSCF starter/generator systems which may be constructed in accordance with the present invention;
Figures 3 and 4 are schematic diagrams of alternative embodiments of the present invention;
Figure 5 is a vector diagram which illustrates the voltages present on a typical neutral-forming transformer; and
Figures 6, 7 and 8 are vector diagrams which illustrate voltages present in neutral-forming transformers which have been modified for use in the starter/generator systems of this invention.

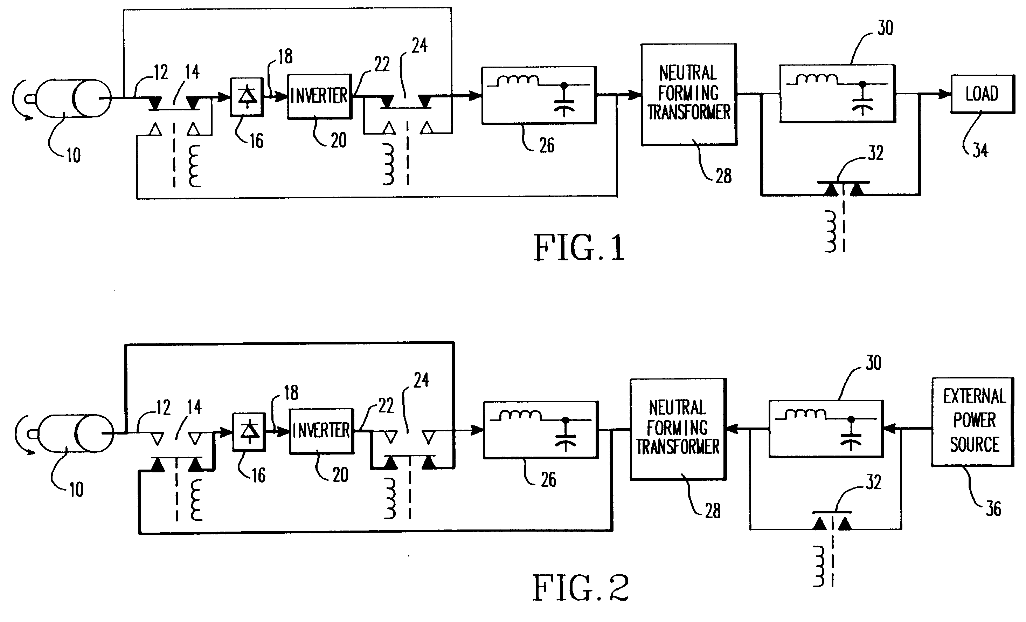

Referring to the drawings, Figs. 1 and 2 are block diagrams of VSCF starter/generator systems which may be constructed in accordance with the present invention. In each of these figures, the direction of power flow is illustrated by heavy lines. In Fig. 1, the system is being operated in the generate mode. A dynamoelectric machine 10, which may be, for example, a synchronous generator, is driven by an external prime mover, not shown, such as an aircraft engine. A first multiple phase power bus 12 which is connected to the machine 10 is connected by way of contactor 14 to a multiple phase bridge rectifier 16. This creates a DC voltage on a pair of DC link conductors 18. An inverter 20 converts the DC voltage on the link conductors to a constant frequency AC voltage on a second multiple phase power bus 22. The floating voltage on bus 22 is connected to a filter 26 and a neutral-forming transformer 28, which converts it to a ground-referenced AC output voltage. A starter filter 30 is bypassed by the contacts of contactor 32 so that the ground-referenced AC voltage is delivered to a load 34.

Figure 2 illustrates the system of Fig. 1 which has been reconfigured to operate in the starter mode. In Fig. 2, an external power source, which may be, for example, a utility bus or a ground power cart, is connected to the starter filter 30 and delivered to the neutral-forming transformer 28. Contactor 14 switches the output of the neutral-forming transformer to the rectifier 16 to produce the DC link voltage which is converted by inverter 20 to a controllable frequency AC output voltage on bus 22 in accordance with known techniques such as that illustrated in U.S. Patent No. 4,574,340. Contactor 24 is used to connect the second multiple phase power bus 22 to the first multiple phase power bus 12 so that the machine 10 is driven as a motor to serve as a starter for an associated engine, not shown.

It is well known that the harmonic components and weight of the starter filter 30 will be greatly reduced if the rectifier which is used to produce the DC link voltage is changed from the typical six-pulse configuration to a twelve-pulse configuration. This is because the harmonic components for a twelve-pulse rectifier begin with the eleventh harmonic. The harmonic distribution will be 9% of the eleventh harmonic, 8% of the thirteenth, 4% of the twenty-third, 4% of the fifteenth, and so on. The filter needed to reduce these harmonics will be much smaller in size than that required for a six-pulse rectifier. Since the filter is smaller, the leading power factor is not a problem with respect to generator self-excitation in the external power source. To accomplish this, rectifiers used in the present invention require twelve diodes rather than the six used in typical existing VSCF converter rectifier assemblies. A twelve-pulse rectifier consists of two conventional six-pulse rectifiers which are fed by separate three-phase voltages. These two sets of three-phase voltages are shifted from each other by 30 degrees. Thus a phase-shifting, three-phase to six-phase transformer is needed to implement a twelve-pulse rectifier system. The added weight of a dedicated transformer to perform this function would again be excessive and may result in a system no lighter than a six-pulse, filtered approach.

Since present VSCF systems include a neutral-forming transformer, this invention presents a way in which this transformer can be modified to provide the desired 30-degree phase shift between the two sets of three-phase voltages as needed for the starter mode of operation. This results in a relatively low harmonic input current starter system, thereby reducing the size and weight of the required starter filter. Weight increases incurred in the VSCF generator system, by adding the starter function of this invention, are more than offset by the weight reduction achieved by removing the conventional dedicated started from the engine.

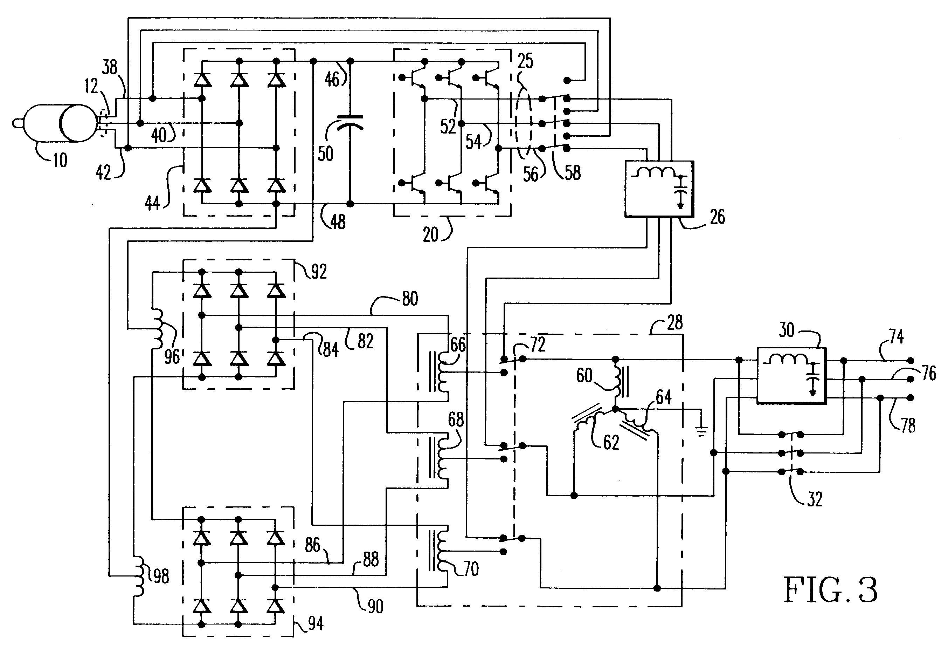

Figure 3 is a schematic diagram of a VSCF starter/generator system constructed in accordance with one embodiment of the present invention. In this embodiment, the dynamoelectric machine 10 is electrically connected to a first multiple phase power bus 12 comprising conductors 38, 40 and 42. Voltage on this power bus is rectified by a first three-phase bridge rectifier 44 to produce a DC voltage on a pair of DC link conductors 46 and 48. A filter capacitor 50 is connected across the DC link conductors. Inverter 20 is operated in accordance with known techniques to produce a constant frequency AC output on a second multiple phase power bus 25 comprising conductors 52, 54 and 56. Three switches 58, which may be the contacts of a contactor, are used to alternatively switch the second power bus to filter 26 during generator operation or to the first power bus during starter operation. The neutral-forming transformer 28 includes a first set of wye-connected coils 60, 62, and 64 for converting the floating AC voltage on the second power bus to a ground-referenced voltage, and a second set of center-tapped coils 66, 68, and 70. During the generate mode of operation, a second plurality of switches 72, which may be, for example, the contacts of a contactor, are used to connect the wye-connected coils of transformer 28 to the second power bus 25.

During starter operation, an external three-phase voltage is applied to lines 74, 76, and 78, and switches 72 are actuated to connect the center taps of coils 66, 68, and 70 to one end of coils 60, 62, and 64, respectively. Transformer 28 is wound such that this produces a first set of three-phase voltages on lines 80, 82, and 84, and a second set of three-phase voltages, phase-displaced from the first set by 30 electrical degrees, on lines 86, 88, and 90. The first set of phase-displaced voltages is rectified by bridge rectifier 92 while the second set of phase-displaced voltages is rectified by rectifier 94. Bridge rectifiers 92 and 94 are electrically connected to interphase transformers 96 and 98 to produce a twelve-pulse rectified DC voltage on the DC link conductors 46 and 48. Switches 58 are actuated to connect the output of inverter 20 to the machine 10 so that the machine can operate as a starter.

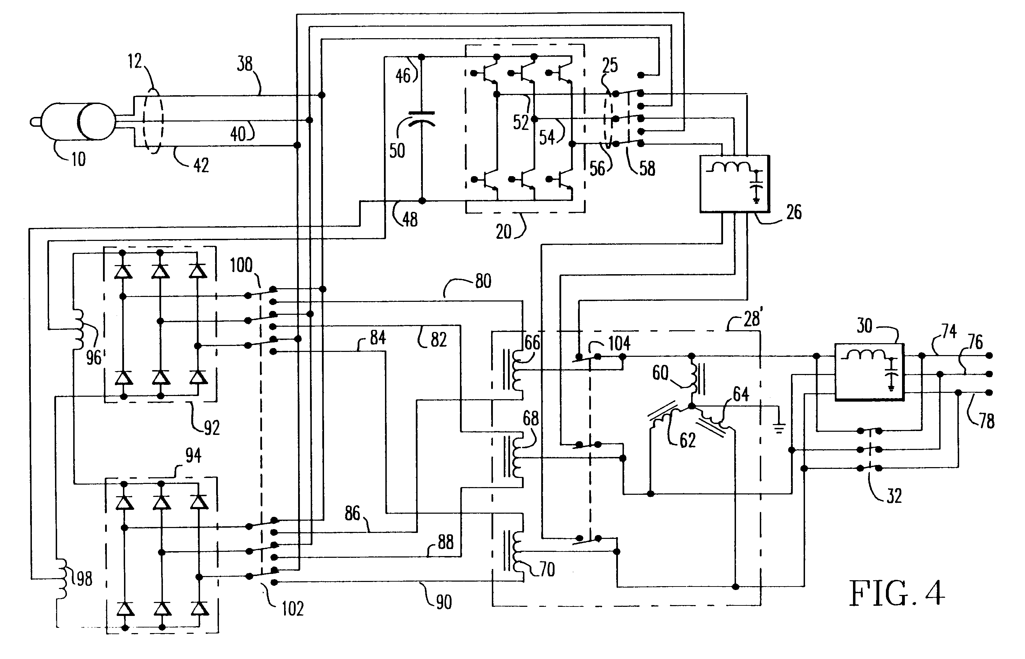

Figure 4 is a schematic diagram of an alternative embodiment of the present invention. As in Fig. 3, all switches are shown in the position required for generator operation. The system of Fig. 4 provides a different switching arrangement to eliminate one of the bridge rectifiers required by the system of Fig. 3. In the Fig. 4 system, a first and second set of switches 100 and 102 are used to connect bridge rectifiers 92 and 94 to the first power bus 12 during generator operation or to the two sets of phase-displaced three-phase voltages on lines 80, 82, 84, 86, 88, and 90 during starter operation. Transformer 28′ is wound so that center-tapped coils 66, 68, and 70 are permanently connected to one end of wye-connected coils 60, 62, and 64, respectively. Switches 104 are used to connect the output of filter 26 to the transformer 28′ during generator operation. When all of the switches of Fig. 4 are operated to their alternate position, an externally supplied three-phase voltage on lines 74, 76, and 78 can be used to drive the machine 10 as a starting motor.

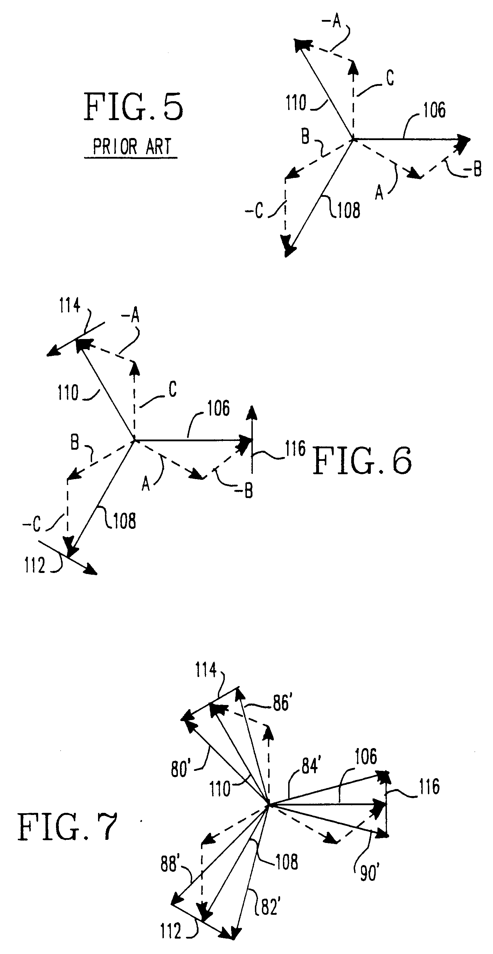

Figure 5 is a vector diagram which illustrates how a typical DC link VSCF neutral-forming transformer is wound. This figure represents a so-called "zig-zag" transformer design which is popular because of its exceptionally good coupling between windings and thus low impedance. This vector diagram shows the applied line to neutral voltages as solid vectors 106, 108, and 110, while the voltages on each of the six windings are illustrated as dotted vectors A, -A, B, -B, C, and -C. Note that the parallel arrows (dotted) are wound on the same leg of the iron core of the transformer; thus a three-legged core is needed and used.

Figure 6 is a vector diagram which illustrates one method of modifying the neutral-forming transformer of Fig. 5 by adding center-tapped windings 112, 114, and 116. Note that these new vectors are also parallel to existing zig-zag vectors in Fig. 5. Therefore, the added windings can be placed on the existing three-legged core.

Figure 7 illustrate the final voltage vectors for the modified neutral-forming transformer. A first set of three-phase voltage 80′, 82′, and 84′ would appear on lines 80, 82, and 84 of Figs. 3 and 4 while a second set of three-phase AC voltages 86′, 88′, and 90′ would be placed on lines 86, 88, and 90 of Figs. 3 and 4. Note that the desired two sets of phase-displaced three-phase voltage vectors are shown on either side of the applied voltage vectors 106, 108, and 110, and that the added winding magnitude is sized precisely to provide the desired ±15-degree phase shift relative to the applied voltage. Also note that since the phase-shifting transformer is center-fed, the impedance on both phase-shifted windings is symmetrical. This is a necessary feature in twelve-pulse rectifier applications.

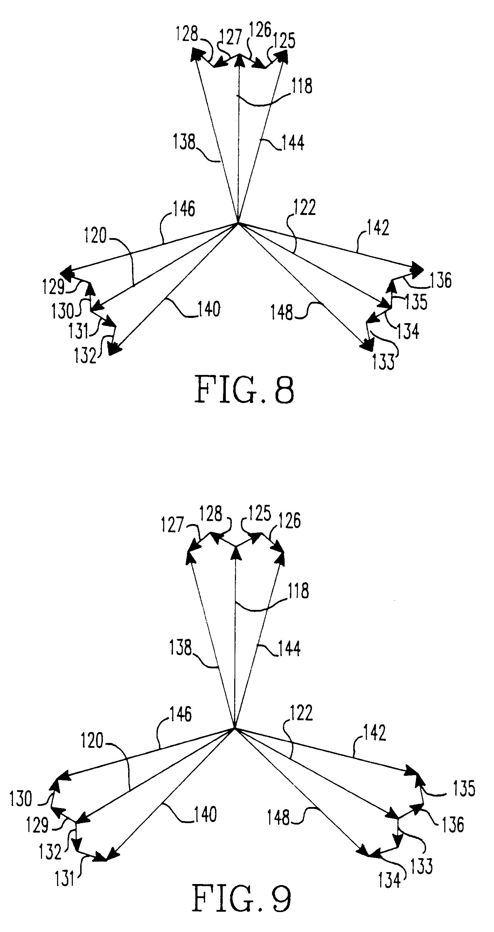

Figures 8 and 9 are vector diagrams which illustrate alternative transformer winding arrangements which may also be used in systems of this invention. In Fig. 8, vectors 118, 120, and 122 represent the applied voltages which are summed with voltages 124-136 to produce a first set of phase-displaced voltages 138, 140, and 142, and a second set of phase-displaced voltages 144, 146, and 148. Figure 9 illustrates alternative connections of the same transformer as Fig. 8 to achieve the same result.

## Claims

1. A variable speed, constant frequency starter/generator system comprising
for generator operation:
a dynamoelectric machine (10) electrically connected to a first multiple phase bus (38,40,42);
a first multiple phase rectifier (92);
a pair of DC link conductors (46,48);
an inverter (20) for converting a DC voltage on the DC link conductors to a floating multiple phase AC voltage on a second multiple phase bus (25); and
a transformer (28) including a main winding (60,62,64) for converting the floating multiple phase AC voltage on the second multiple phase bus to a ground-referenced, multiple phase AC voltage on an output bus (74,76,80);
and for starter operation:
means for applying an external multiple phase AC voltage to the output bus (74,76,80); characterised by the transformer further including an auxiliary winding (66,68,70) for converting the external multiple phase voltage to a pair of phase displaced multiple phase voltages;
means (100,102) for connecting a first one of the phase displaced multiple phase voltages to the first multiple phase rectifier (92) and for connecting a second one of the phase displaced multiple phase voltages to a second multiple phase rectifier (94);
means for connecting the first and second multiple phase rectifiers to the DC link conductors to produce an output from the inverter (20) on the second multiple phase bus (25); and
means (58) for connecting the second multiple phase bus to the electric machine (10).

2. A variable speed, constant frequency starter/generator system according to claim 1, wherein the transformer main winding (60,62,64) is wye-connected; and the transformer auxiliary winding includes a plurality of centre tapped coils (66,68,70), each having a centre tap connected to the main winding during starter operation of the dynamoelectric machine.

3. A method for operating a starter/generator system according to claim 1 or claim 2 comprising the steps of, for a generating mode of operation:
rectifying a multiple phase, variable frequency AC output voltage from the dynamoelectric machine (10) to produce a first DC voltage;
using the inverter (20) to convert the first DC voltage to a floating, multiple phase, constant frequency AC voltage;
connecting the floating, multiple phase, constant frequency AC voltage to the transformer (28) to produce a ground-referenced multiple phase AC output voltage; and
supplying the ground-referenced multiple phase AC output voltage to an external load;
and for a starting mode of operation:
applying an external multiple phase AC voltage to the output bus (74,76,80);
using the auxiliary windings (66,68,70) of the transformer to convert the external multiple phase AC voltage to a pair of phase displaced multiple phase voltages;
connecting the first one of the phase displaced multiple phase voltages to the first multiple phase rectifier (92) and connecting the second one of the phase displaced multiple phase voltages to the second multiple phase rectifier (94);
connecting the first and second multiple phase rectifiers to the DC link conductors to produce a controlled frequency AC output voltage from the inverter (20) on the second multiple phase bus (25); and
connecting the second multiple phase bus to the dynamoelectric machine (10) to drive the dynamoelectric machine with the controlled frequency AC voltage.

4. A method according to claim 3 wherein the step of using the transformer to develop a pair of multiple phase, phase displaced AC voltages comprises: connecting the centre tap point of each of three coils (66,68,70) of the transformer to a first end of one of three coils (60,62,64) of a wye connected winding of the transformer with the external multiple phase AC voltage being applied to the wye connected winding.

## Patentansprüche

1. Starter/Generator-Anordnung mit veränderlicher Drehzahl und konstanter Frequenz, die aufweist:
für den Generatorbetrieb:
eine dynamoelektrische Maschine (10), die elektrisch mit einem ersten Mehrphasenbus (38, 40, 42) verbunden ist;
einen ersten Mehrphasengleichrichter (92);
ein Paar Gleichspannungsverbindungsleitungen (46, 48);
einen Wechselrichter (20) zur Umwandlung einer Gleichspannung auf den Gleichspannungsverbindungsleitungen in eine schwebende Mehrphasenwechselspannung auf einem zweiten Mehrphasenbus (25); und
einen Transformator (28) mit einer Hauptwicklung (60, 62, 64) zur Umwandlung der schwebenden Mehrphasenwechselspannung auf dem zweiten Mehrphasenbus in eine massebezogene Mehrphasenwechselspannung auf einem Ausgangsbus (74, 76, 80);
und für den Starterbetrieb:
eine Einrichtung zum Anlegen einer externen Mehrphasenwechselspannung an den Ausgangsbus (74, 76, 80); gekennzeichnet dadurch, daß der Transformator eine Hilfswicklung (66, 68, 70) zur Umwandlung der externen Mehrphasenwechselspannung in ein Paar phasenverschobener Mehrphasenspannungen enthält; sowie durch
Einrichtungen (100, 102) zum Verbinden einer ersten der phasenverschobenen Mehrphasenspannungen mit dem ersten Mehrphasengleichrichter (92) und zum Verbinden einer zweiten der phasenverschobenen Mehrphasenspannungen mit einem zweiten Mehrphasengleichrichter (94);
eine Einrichtung zum Verbinden der ersten und zweiten Mehrphasengleichrichter mit den Gleichspannungsverbindungsleitungen, um über den Wechselrichter (20) auf dem zweiten Mehrphasenbus (25) eine Ausgangsspannung zu erzeugen; und
eine Einrichtung (58) zum Verbinden des zweiten Mehrphasenbusses mit der elektrischen Maschine (10).

2. Starter/Generator-Einrichtung mit veränderlicher Drehzahl und konstanter Frequenz nach Anspruch 1, dadurch gekennzeichnet, daß die Transfomatorhauptwicklung (60, 62, 64) im Stern geschaltet ist, und daß die Transformatorhilfswicklung mehrere Wicklungen (66, 68, 70) mit Mittelabgriff enthält, wovon jede während des Starterbetriebs der dynamoelektrischen Maschine einen Mittelabgriff mit der Hauptwicklung verbunden hat

3. Verfahren zum Betreiben einer Starter/Generator-Anordnung nach Anspruch 1 oder Anspruch 2 mit den Schritten:
für einen Generatorbetriebsmodus:
Gleichrichten einer mehrphasigen Ausgangswechselspannung mit veränderlicher Frequenz von der dynamoelektrischen Maschine (10), um eine erste Gleichspannung zu erzeugen;
Einsetzen des Wechselrichters (20), um die erste Gleichspannung in eine schwebende Mehrphasenwechselspannung mit konstanter Frequenz umzuwandeln;
Verbinden der schwebenden Mehrphasenwechselspannung mit konstanter Frequenz mit dem Transformator (28), um eine massebezogene Mehrphasen-Ausgangswechselspannung zu erzeugen; und
Liefern der massebezogenen Mehrphasen-Ausgangswechselspannung an eine externe Last;
und für einen Starterbetriebsmodus:
Anlegen einer externen Mehrphasenwechselspannung an den Ausgangsbus (74, 76, 80);
Einsetzen der Hilfswicklungen (66, 68, 70) des Transformators, um die externe Mehrphasenwechselspannung in ein Paar phasenverschobener Mehrphasenspannungen umzuwandeln;
Verbinden der ersten der phasenverschobenen Mehrphasenspannungen mit dem ersten Mehrphasengleichrichter (92), und Verbinden der zweiten der phasenverschobenen Mehrphasenspannungen mit dem zweiten Mehrphasengleichrichter (94);
Verbinden der ersten und zweiten Mehrphasengleichrichter mit den Gleichspannungsverbindungsleitungen, um über den Wechselrichter (20) eine Ausgangswechselspannung mit gesteuerter Frequenz auf dem zweiten Mehrphasenbus (25) zu erzeugen; und
Verbinden des zweiten Mehrphasenbusses mit der dynamoelektrischen Maschine (10), um die dynamoelektrische Maschine mit der Wechselspannung mit gesteuerter Frequenz anzusteuern.

4. Verfahren nach Anspruch 3, dadurch gekennzeichnet, daß der Schritt des Transformatoreinsatzes zur Erzeugung eines Paars phasenverschobener Mehrphasenwechselspannungen aufweist: Verbinden des Mittelabgriffspunkts von jeder der drei Wicklungen (66, 68, 70) des Transformators mit einem ersten Ende von einer der drei Wicklungen (60, 62, 64) einer im Stern geschalteten wicklung des Transformators, wobei die externe Mehrphasenwechselspannung an die im Stern geschaltete Wicklung angelegt ist.

## Revendications

1. Système démarreur-générateur à vitesse variable et fréquence constante comprenant
pour le fonctionnement en générateur :
une machine dynamoélectrique (10) connectée à un premier bus polyphasé (38, 40, 42),
un premier redresseur polyphasé (92),
une paire de conducteurs de liaison à courant continu (46, 48),
un onduleur (20) pour la conversion d'une tension continue sur ces conducteurs de liaison à courant continu en une tension alternative polyphasée flottante sur un second bus polyphasé (25), et
un transformateur (28) comportant un enroulement principal (60, 62, 64) pour la conversion de cette tension alternative polyphasée flottante sur le second bus polyphasé en une tension alternative polyphasée rapportée à la terre sur un bus de sortie (74, 76, 78),
et pour le fonctionnement en démarreur :
un moyen d'application d'une tension alternative polyphasée extérieure au bus de sortie (74, 76, 78), caractérisé par le fait que le transformateur comporte en outre un enroulement auxiliaire (66, 68, 70) pour la conversion de cette tension polyphasée extérieure en une paire de tensions polyphasées déphasées,
des moyens (100, 102) pour la connexion d'une première de ces tensions polyphasées déphasées au premier redresseur polyphasé (92) et la connexion d'une seconde de ces tensions à un second redresseur polyphasé (94),
des moyens de connexion des premier et second redresseurs polyphasés aux conducteurs de liaison à courant continu pour la production d'une sortie de l'onduleur (20) sur le second bus polyphasé (25), et
des moyens (58) pour la connexion du second bus polyphasé à la machine électrique (10).

2. Système démarreur-générateur à vitesse variable et fréquence constante selon la revendication 1, dans lequel l'enroulement principal (60, 62, 64) du transformateur est monté en étoile et l'enroulement auxiliaire du transformateur comporte une série de bobines à prise médiane (66, 68, 70) ayant chacune une prise médiane reliée à l'enroulement principal pendant le fonctionnement en démarreur de la machine dynamoélectrique.

3. Procédé de fonctionnement d'un système démarreur-générateur selon l'une des revendications 1 et 2, comprenant comme étapes,
pour un mode de fonctionnement en générateur :
le redressement d'une tension de sortie alternative polyphasée de fréquence variable de la machine dynamoélectrique (10) pour la production d'une première tension continue,
l'utilisation de l'onduleur (20) pour la conversion de cette première tension continue en une tension alternative polyphasée flottante de fréquence constante,
la connexion de cette tension alternative polyphasée flottante de fréquence constante au transformateur (28) pour la production d'une tension de sortie alternative polyphasée rapportée à la terre, et
l'application de cette tension de sortie alternative polyphasée rapportée à la terre à une charge extérieure,
et pour un mode de fonctionnement en démarreur :
l'application d'une tension alternative polyphasée extérieure au bus de sortie (74, 76, 78),
l'utilisation des enroulements auxiliaires (66, 68, 70) du transformateur pour la conversion de cette tension alternative polyphasée extérieure en une paire de tensions polyphasées déphasées,
la connexion de la première de ces tensions polyphasées déphasées au premier redresseur polyphasé (92) et la connexion de la seconde de ces tensions au second redresseur polyphasé (94),
la connexion des premier et second redresseurs polyphasés aux conducteurs de liaison à courant continu pour la production d'une tension de sortie alternative de fréquence commandée de l'onduleur (20) sur le second bus polyphasé (25), et
la connnexion du second bus polyphasé à la machine dynamoélectrique (10) pour l'actionnement de celle-ci avec cette tension alternative de fréquence commandée.

4. Procédé selon la revendication 3, dans lequel l'étape d'utilisation du transformateur pour la création d'une paire de tensions alternatives polyphasées déphasées comprend la connexion de la prise médiane de chacune des trois bobines (66, 68, 70) du transformateur à une première extrémité d'une de trois bobines (60, 62, 64) d'un enroulement en étoile du transformateur, avec la tension alternative polyphasée extérieure appliquée à cet enroulement en étoile.
